# EUROPÄISCHE PATENTSCHRIFT

(11) **EP 1 032 065 B1**
(45) Veröffentlichungstag und Bekanntmachung des Hinweises auf die Patenterteilung: **03.10.2007**
(21) Anmeldenummer: 00101763.1
(22) Anmeldetag: 28.01.2000
(51) Int. Cl.: H01M 8/02

(54) **Dichtungsanordnung für grossflächige dünne Teile**
Sealing arrangement for thin large area parts
Agencement d'étanchéité pour des éléments minces à grande surface

(30) Priorität: 27.02.1999 DE 19908555
(43) Veröffentlichungstag der Anmeldung: 30.08.2000
(73) Patentinhaber: Carl Freudenberg KG, 69469 Weinheim (DE)
(72) Erfinder: Schilling, Hermann, Dr., 69469 Weinheim (DE); Hofmann, Günter, 68526 Ladenburg (DE); Bock, Eberhard, Dr., 69509 Mörlenbach (DE)

(56) Entgegenhaltungen:
- WO-A-99/04446
- DE-A- 19 960 516
- GB-A- 2 323 700
- US-A- 4 028 209
- US-A- 4 342 460
- US-A- 4 640 876
- US-A- 4 751 153
- PATENT ABSTRACTS OF JAPAN vol. 017, no. 450 (E-1416), 18. August 1993 (1993-08-18) -& JP 05 101837 A (MITSUBISHI HEAVY IND LTD), 23. April 1993 (1993-04-23)
- PATENT ABSTRACTS OF JAPAN vol. 1999, no. 12, 29. Oktober 1999 (1999-10-29) & JP 11 179755 A (MITSUBISHI PLASTICS IND LTD), 6. Juli 1999 (1999-07-06)
- PATENT ABSTRACTS OF JAPAN vol. 2000, no. 04, 31. August 2000 (2000-08-31) & JP 2000 012054 A (NOK CORP), 14. Januar 2000 (2000-01-14) & US 6 337 120 B1 (Y SASAKI ET AL) 8. Januar 2002 (2002-01-08)

## Beschreibung

### Technisches Gebiet

Die Erfindung befaßt sich mit einer Dichtungsanordnung für miteinander zu verbindende großflächige dünne Teile zum gegenseitigen Abdichten von benachbarten Trennplatten, insbesondere Bipolarplatten mit zwischengelegten lonenaustausch-Membran-Einheiten (MEA) in Brennstoffzellen mit Dichtelementen aus polymerem Material, bei denen die einzelnen Dichtelemente in Nuten der Trennplatten eingefügt sind wobei zwischen den Seitenwänden der Nuten und den benachbarten Seitenwänden der Dichtelemente Spalten zur Aufnahme des beim Zusammenpressen der Dichtelemente ausweichenden elastischen Dichtungsmaterials vorhanden sind wobei wenigstens eine Spalte über eine ganze Seitenwand einer Nut verläuft und die Dichtelemente vor ihrem Zusammenpressen die Nuten nur teilweise ausfüllen und die Höhe der Dichtelemente größer als die Tiefe der Nuten ist.

In neuerer Zeit haben elektrochemische Brennstoffzellen an Bedeutung gewonnen. Hier liegen verschiedene Ausführungsformen vor, je nach eingesetzten Bau- bzw. Brennstoffmaterialien. So ist beispielsweise in der PCT-Anmeldung WO 93/06627 eine solche Brennstoffzelle ausführlich behandelt. Unabhängig von der Konfiguration der Brennstoffzellen ist die Abdichtung der einzelnen gas- bzw. flüssigkeitführenden Kanäle von großer Bedeutung. In der angeführten PCT-Anmeldung werden hierzu keine näheren Ausführungen gemacht. Es wird lediglich angemerkt, daß die Peripherie der einzelnen Trennplatten mit einer Abdichtung versehen ist.

### Stand der Technik

Auf die Dichtungsproblematik geht näher die EP PA 0 604 683 ein und es wird ein Dichtungsmaterial aus Silikon, Gummi oder extrudierbarem elastomerem Material vorgeschlagen. In die Nuten der Trennplatten wird das Dichtmaterial vor dem Zusammenfügen der Platten injiziert. Eine solche Dichtungsanordnung hat jedoch den Nachteil, daß sie im Gebrauch sehr schnell an Elastizität verliert und somit ggfs. Undichtigkeiten auftreten können.

Allgemein bekannt ist auch, separat hergestellte Dichtungen einzeln in die vorgesehenen Nuten in den Trennplatten einzukleben. Dieser Vorgang ist zeitaufwendig, schwer zu beherrschen und birgt die Gefahr von Produktionsfehlern in sich. Die mechanische Belastung während der Montage führt häufig zu Verformungen und Dehnungen und damit zur Unbrauchbarkeit der Dichtungen. Eine hohe Ausschußrate und ein hoher Arbeitseinsatz sind die Folgen.

Die Bipolarplatten einer Brennstoffzelle sind durch die sogenannte MEA (Membrane-Elektrode-Assembly) voneinander getrennt. Sind beispielsweise die Dichtungen der beiden Trennplatten bzw. Bipolarplatten, die durch die MEA voneinander getrennt sind, nach der Montage lateral gegeneinander versetzt, so tritt in den Bipolarplatten
und in den Dichtungen eine ungleichmäßige Kräfte- und Pressungsverteilung auf, die die einzelnen Komponenten der Brennstoffzelle stark beanspruchen. Dieser laterale Versatz der Dichtung ist aufgrund von Herstellungstoleranzen kaum zu vermeiden.

Um die genannten Probleme zu umgehen, wir in der EP PA 0774 794 vorgeschlagen, die Trennplatten so auszubilden, d.h. mit einer Erhebung zu versehen, daß sie gleichzeitig die Dichtung bilden. Dieses setzt jedoch voraus, daß die Trennplatten aus einem elastischen plastisch verformbaren Material bestehen.

Eine andere Möglichkeit für eine Dichtungsanordnung zwischen großflächigen Teilen zeigt die US-A-4 751 153. Dort werden schnurförmige Dichtelemente mit rundem Querschnitt in Nuten der Teile eingelegt. Die Dichtelemente haben einen Durchmesser, welcher der Breite der Nut entspricht und liegen in der Nut in Linienberührung an den benachbarten Wänden der Nut an. Bei einer Montage der Teile können die Dichtelemente aus den Nuten herausfallen oder auch in ungewollte Lage verschoben werden.

### Darstellung der Erfindung

Der Erfindung liegt die Aufgabe zugrunde, eine Dichtungsanordnung zu schaffen, die eine einfache und schnelle Montage der Brennstoffzelle erlaubt und außerdem eine gleichmäßige Kräfte- und Pressungsverteilung in den einzelnen Komponenten gewährleistet.

Die Lösung der gestellten Aufgabe erfolgt mit den Merkmalen des Anspruchs 1. Zwischen den Seitenwänden der Dichtelemente und den benachbarten Wänden der Ausnehmungen sind Freiräume oder Spalte zur Aufnahme des beim Zusammenpressen ausweichenden elastischen Dichtungsmaterials vorhanden, wobei vor dem Zusammenpressen die Dichtelemente die Ausnehmungen oder Spalte nur teilweise ausfüllen und die Höhe der Dichtelemente größer als die Tiefe der Ausnehmungen oder Spalte ist. Somit wird folglich eine Anordnung geschaffen, bei der die Elastizität des Dichtungsmaterials beim Zusammenpressen durch eine behinderte Querdehnung nicht aufgehoben wird. Beim Zusammenpressen der Platten kann das Dichtungsmaterial seitlich ausweichen und es wird eine zuverlässige Dichtung erreicht. Auch die während des Betriebs der Brennstoffzelle auftretenden Änderungen der Komponenten hinsichtlich ihrer Ausdehnung werden von dieser Dichtungsanordnung unproblematisch aufgenommen.

Mit Ausnehmung wird hier jedwede Ausgestaltung an einer Trenn-oder Bipolarplatte bezeichnet, in die das Dichtelement eingebracht ist. Die Ausnehmung kann in der Form einer muldenartigen Vertiefung vorliegen oder auch als Nut ausgebildet sein. Einzuhalten ist jedoch, daß das über die Ausnehmungen hinausragende Volumen der Dichtelemente kleiner als das bei nicht zusammengepreßten Dichtelementen vorhandene Volumen der Freiräume beziehungsweise Spalte der Ausnehmungen ist. Es ist ausreichend Freiraum vorzusehen, damit das Dichtungsmaterial beim Zusammenpressen seitlich ausweichen kann. Dabei muß wenigstens auf einer Seite des Dichtelements ein Freiraum oder Spalt hierfür vorhanden sein.

Die Bipolarplatten für Brennstoffzellen werden überwiegend aus Graphit, Metallblechen oder elektrisch leitenden Polymeren hergestellt. Insbesondere bei Bipolarplatten aus Graphit ist die Haftung der Dichtung am Graphit problematisch. Um hier eine größtmögliche Sicherheit zu erreichen, ist vorgesehen bei Bipolarplatten mit einseitig vorhandenen Ausnehmungen die Nut in Form einer Hinterschneidung auszuführen oder die Talsohlen mit Sacklöchern zu versehen, um dadurch eine Verankerung der Dichtelemente in den Platten zu erreichen. Dabei ist es auch günstig, wenn die Sacklöcher schräg zur Plattenebene ausgerichtet sind oder an ihrem Boden eine Erweiterung haben. Dadurch wird ein Verhaken der eingespritzten Dichtung mit der Platte erreicht.

Gemäß einer anderen Ausführungsform können die Bipolarplatten mit einseitigen Ausnehmungen von der Talsohle ausgehend durchgängige Löcher haben, die in von der anderen Seite der Platte angebrachte Bohrungen größeren Durchmessers münden. Während des Spritzvorganges gelangt dadurch ein Teil der Dichtungsmasse durch die Platte hindurch in die Bohrung und breitet sich darin aus. Auf diese Weise wird eine sichere Verankerung der Dichtelemente erreicht, die insbesondere bei Platten der Brennstoffzelle, bei denen keine doppelseitige Dichtungsanordnung erforderlich ist, angewendet werden kann.

Bei Bipolarplatten, die beidseitig mit Dichtelementen zu versehen sind, ist es vorteilhaft, wenn bei sich gegenüberliegenden Ausdehnungen deren Talsohlen mit durchgehenden Löchern versehen sind. In diesem Fall werden die sich gegenüberliegenden Dichtelemente während des Spritzvorganges verliersicher miteinander verbunden.

Bei manchen Bipolarplatten besteht die Aufgabe, die Dichtelemente an den Außenkanten der Platten bzw. an den Kanten von Durchbrüchen in den Platten anzubringen. Hier können in weiterer Ausgestaltung des Erfindungsgedankens die abzudichtenden Kanten der Bipolarplatten ein- oder zweiseitig abgestuft sein und jeweils von einem Dichtelement eingefaßt werden. Die entsprechenden Kanten werden vom Dichtelement umspannt und auf beiden Plattenseiten sind die Dichtungen vorhanden.

Die oben beschriebenen Ausgestaltungen der Dichtungselemente ergeben eine vertiersichere Befestigung der Dichtelemente an den Bipolarplatten. Außerdem liegen die Dichtelemente der einzelnen Platten bei ihrem Zusammenbau in einer Flucht, so daß eine sehr gute gleichmäßige Kräfte- und Pressungsverteilung in den Dichtelementen erreicht wird. Diese gleichmäßige Kräfte- und Pressungsverteilung kann noch weiter dadurch unterstützt werden, daß die Dichtelemente an einer ihrer Dichtflächen mit einem vorstehenden Dichtprofil ausgestattet werden, das an der MEA im Bereich der flach ausgebildeten Dichtfläche des benachbarten Dichtprofils bzw. Dichtfläche zum Anliegen kommt. Dies ist besonders günstig, wenn zwischen den Dichtflächen die relativ weiche und dünne Membrane eingespannt wird.

### Kurzbeschreibung der Zeichnung

Anhand mehrerer in der Zeichnung dargesteller Ausführungsbeispiele wird die Erfindung näher erläutert. Es zeigt
- Figur 1: einen Schnitt durch die Randzone einer Zelle mit eingesetzten Dichtelementen in nicht zusammengepreßtem Zustand,
- Figur 2: die Randzone von zwei miteinander verbundenen Zellen im Schnitt,
- Figuren 3A und 3B: ein Bipolarplattenteil mit eingespritzter Dichtung und Sacklöchern in der Draufsicht und im Schnitt gemäß der Linie A-A,
- Figuren 4A und 4B: ausschnittsweise eine Draufsicht auf eine Dichtungsanordnung mit durchgängigen Löchern und einem Schnitt durch die Dichtungsanordnung gemäß der Linie A-A,
- Figuren 5A und 5B: ausschnittsweise eine Draufsicht auf eine Dichtungsanordnung mit gegenüberliegenden Nuten und einen Schnitt gemäß der Linie A-A,
- Figuren 6A und 6B: einen Ausschnitt aus einer Dichtungsanordnung mit einer Randdichtung und einer Dichtung an einer Durchbrechung durch die Bipolarplatte mit einem Schnitt gemäß der Linie A-A,
- Figur 7: einen Schnitt durch eine Dichtungsanordnung mit Dichtelementen mit vorstehendem Dichtprofil und
- Figur 8: einen Schnitt durch eine Dichtungsanordnung in rinnenartigen Ausnehmungen.

### Ausführung der Erfindung

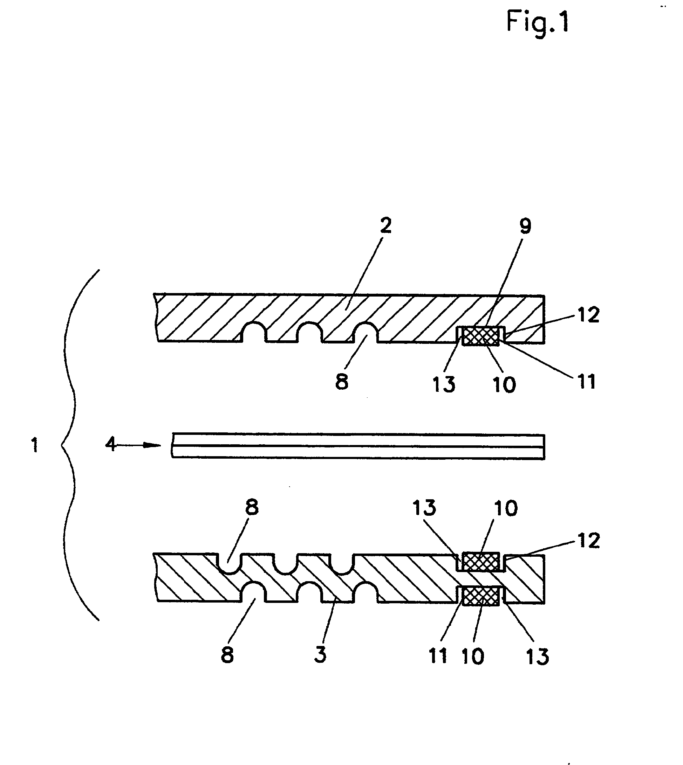

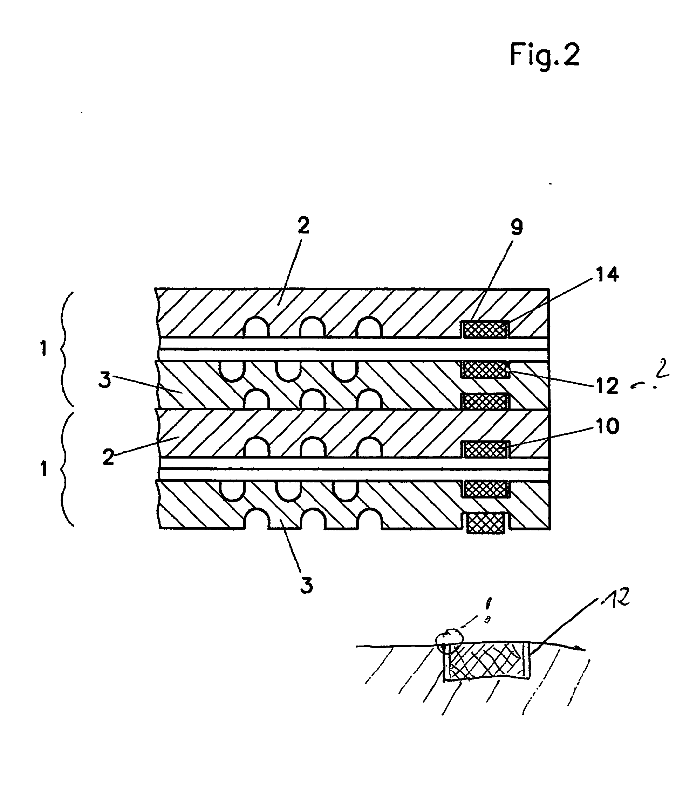

In der Figur 1 ist ein Schnitt durch eine Randzone einer Brennstoffzelle gezeigt, wobei auf Einzelheiten im Aufbau der Brennstoffzelle verzichtet worden ist. Die einzelne Zelle 1 besteht im wesentlichen aus den Biopolarplatten 2 und 3 und der dazwischenliegenden MEA (Membrane Elektrode Assembly) 4. Die Bipolarplatten 2 und 3 sind mit Kanälen 8 für Gase und Flüssigkeiten versehen. In die Nuten 9 der Bipolarplatten 2 und 3 sind die Dichtelemente 10 eingefügt. Im gezeigten Ausführungsbeispiel bestehen die Bipolarplatten 2 und 3 aus Graphit. Die Nuten 9 sind während der Herstellung der Graphitplatten 2 und 3 eingeformt. Die Dichtelemente 10 sind eingespritzt. Durch ein entsprechendes Werkzeug erfolgt der Einspritzvorgang so, daß zwischen den Seitenwänden 11 der Dichtelemente 10 und den angrenzenden seitlichen Nutwänden 12 die freien Spalte 13 vorhanden sind. Diese Spalte 13 sind so bemessen, daß sie beim Zusammendrücken der Dichtung 10 während der Montage deren Querdehnung nicht behindern, wie in Figur 2 gezeigt, so daß die Nut auch nach mehrmaligem Ausdehnen der Dichtung im Betrieb nicht ganz ausgefüllt wird. Die aus elastomerem Material bestehenden Dichtelemente 10 behalten durch diese Maßnahme ihre Federwirkung. Eine sichere Abdichtung mit einer gleichmäßigen Kräfte- und Pressungsverteilung wird auf diese Weise erreicht.

In der Figur 2 ist eine Einzelzelle 1 mit einer weiteren Einzelzelle 1 miteinander verbunden. Die einzelnen Zellen 1 sind sich wiederholende Einheiten, die in der vorgesehenen Anzahl miteinander verbunden werden. Sie haben prinzipiell den gleichen Aufbau. Die zusammengepreßten Dichtelemente 10 haben an beiden Seiten Auswölbungen 14, die nicht an den seitlichen Nutwänden 12 anliegen. Im übrigen entspricht der Aufbau der Teile in Figur 2 dem der Teile in Figur 1, so daß bezüglich der Bezeichnungen auf Figur 1 zurückgegriffen werden kann.

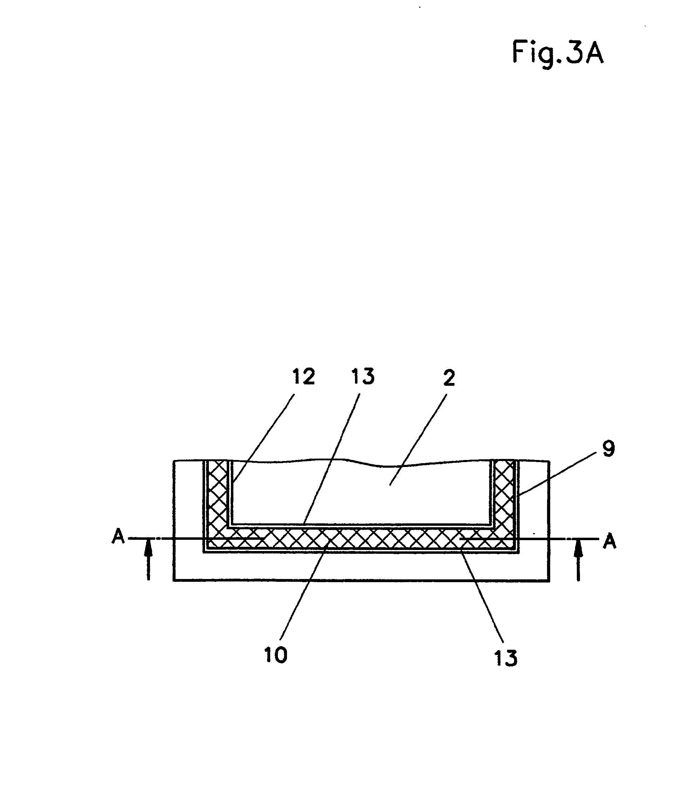

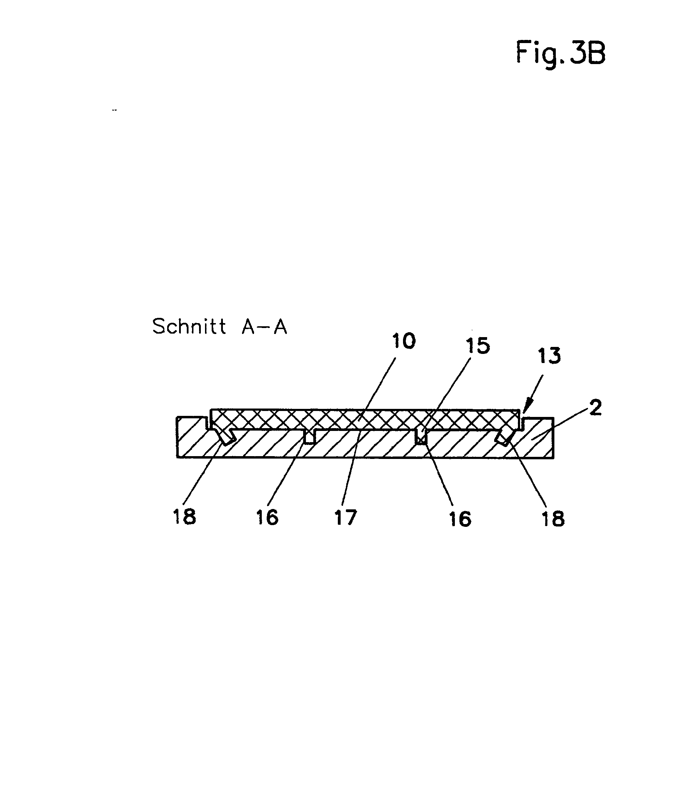

Die Figur 3A zeigt eine Draufsicht auf einen Abschnitt einer Bipolarplatte 2, die mit einer umlaufenden Nut 9 versehen ist und die Figur 3B einen Schnitt gemäß der Linie A-A. In die Nut 9 ist das Dichtelement 10 eingefügt. Zwischen dem Dichtelement 10 und den seitlichen Nutwänden 12 befindet sich die freie Spalte 13. Das Dichtelement 10 wird über die Zapfen 15 in den Sacklöchern 16 gehalten. Die Zapfen 15 entstehen während des Spritzvorganges. Das dafür notwendige Material dringt während des Spritzvorganges in die Sacklöcher 16 ein, die auf dem gesamten Umfang der Nut verteilt, in deren Talsohle oder Nutgrund 17 angebracht sind. Auf diese Weise sind die Dichtelemente 10 an der Bipolarplatte 2 verankert. Zur Verstärkung dieser Verankerung können einzelne oder alle Sacklöcher 16 auch schräg zur Plattenebene ausgerichtet und bevorzugt in der Winkelmitte angeordnet sein, wie das z.B. bei den Sacklöchern 18 gezeigt ist. Die schräge Anordnung der Sacklöcher 18 ist an den Ecken der Dichtung 10 besonders vorteilhaft, da sie hier Schrumpfspannungen in zwei Richtungen aufnehmen können, wenn die Sacklöcher 18 auf die Mitte der Ecke ausgerichtet sind, z.B. in etwa im gleichen Winkel zu den aufeinandertrefenden Nutwänden.

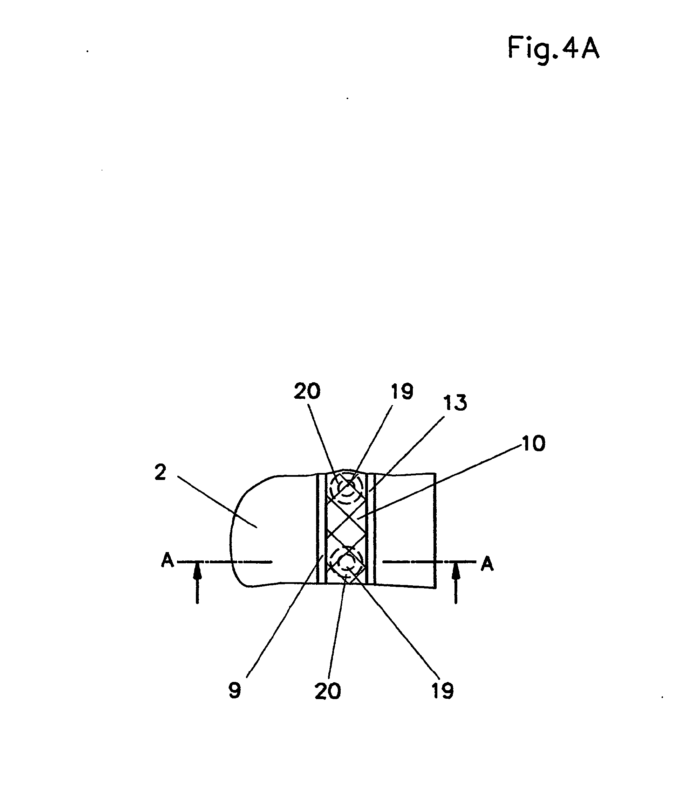

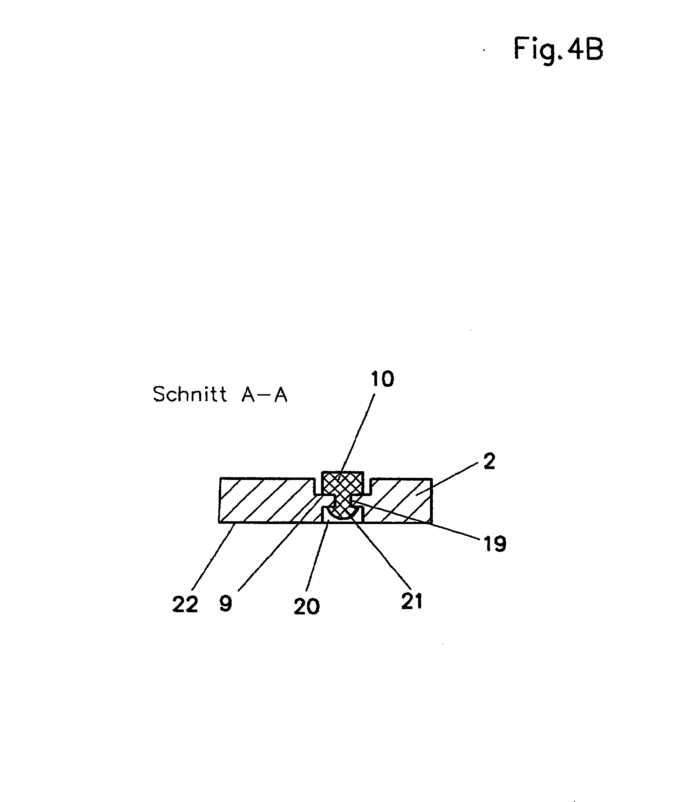

Eine andere Möglichkeit der Verankerung der Dichtelemente 10 ist in den Figuren 4A und 4B dargestellt. Dort werden, wie bereits weiter oben geschildert, die Dichtelemente 10 auf nur einer Seite der Bipolarplatte 2 in die Nut 9 eingefügt. Auf der anderen Seite der Bipolarplatte 2 sind, der Nut 9 genau gegenüberliegend Bohrungen 20 angebracht, die durch die Löcher 19 mit der Nut 9 verbunden sind. Die Bohrungen 20 haben einen größeren Durchmesser als die Löcher 19, so daß während des Herstellungsvorgangs, wenn das Dichtelement 10 in die Nut eingespritzt wird, in den Bohrungen 20 Pfropfen 21 entstehen, welche das Dichtelement 10 sicher an der Bipolarplatte 2 halten. Die Pfropfen 21 stehen nicht über die Ebene 22 der Bipolarplatte 2 hervor, so daß sich hierdurch keine störenden Auswölbungen ergeben.

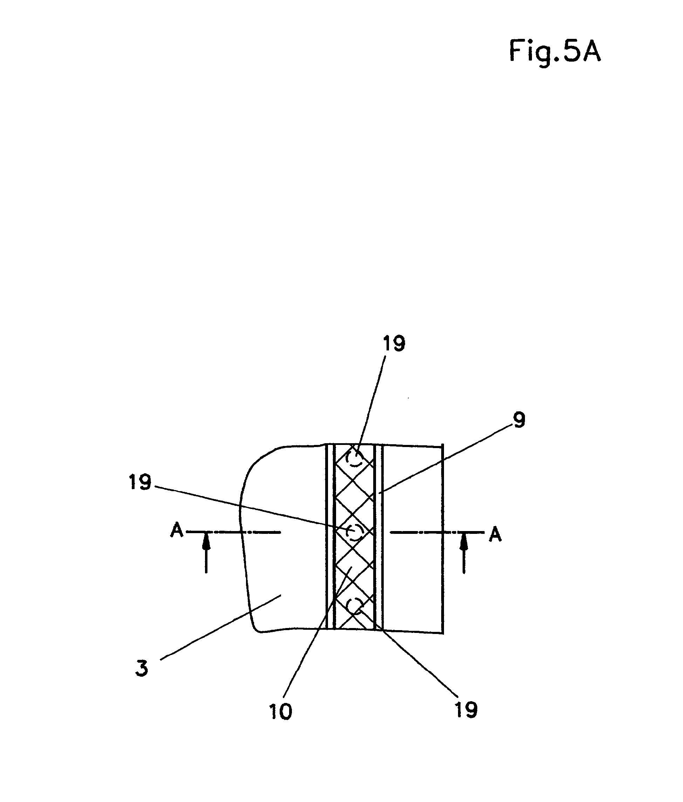

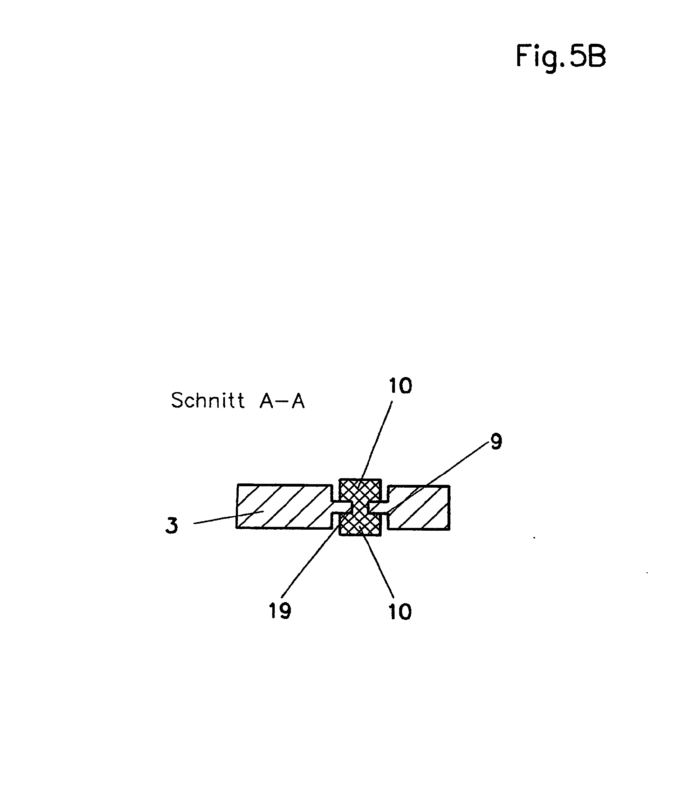

In den Figuren 5A und 5B ist eine Ausbildung der Dichtungsanordnung gezeigt, bei der die Bipolarplatte 3 an ihren beiden Seiten mit den Dichtelementen 10 versehen ist. Die Bipolarplatte 3 ist in den Nuten 9 mit durchgehenden Löchern 19 versehen. Die beiden Dichtelemente 10 werden über die Löcher 19 während des Spritzvorgangs miteinander verbunden und damit unverlierbar an der Bipolarplatte 3 verankert.

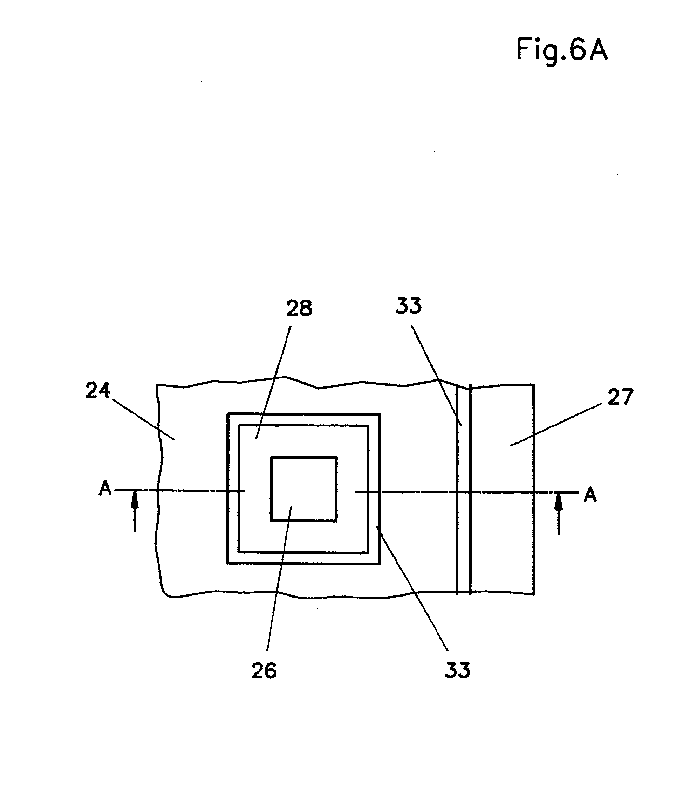

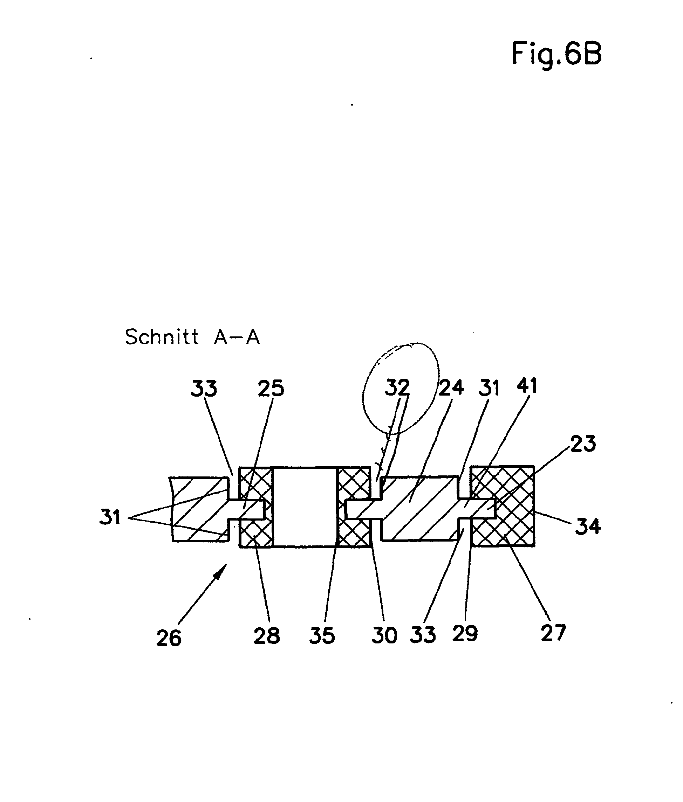

In den voranstehenden Ausführungsbeispielen waren die Dichtelemente 10 in Nuten 9 angeordnet. Möglich ist auch eine Anordnung der Dichtelemente 10 auf dem äußeren Rand 23 einer Bipolarplatte 24 bzw. auf dem Rand 25 einer Durchbrechung 26 in einer Bipolarplatte 24. Diese Möglichkeit ist in den Figuren 6A und 6B gezeigt. Dort sind Dichtelemente 27 und 28 auf dem äußeren Rand 23 der Bipolarplatte 24 bzw. auf den inneren Rändern 25 der Durchbrechung 26 in der Bipolarplatte 24 eingefügt. Wie bei den vorangegangenen Ausführungsformen ist auch hier darauf zu achten, daß zwischen den Seitenwänden 29 und 30 der Dichtelemente 27 und 28 und den angrenzenden seitlichen Nutwänden 31 und 32 freie Spalte 33 vorhanden sind, damit das elastische Dichtelement ausreichend Ausweichmöglichkeit hat. Die Nut ist hier gewissermaßen einseitig, nämlich nur in Bezug auf die Innenseite 29 des außenliegenden Dichtelementes 27 bzw. auf die Außenseite 30 eines innenliegenden Dichtelementes 28. Der Spalt 33 entsteht zwischen der Dichtung 27 beziehungsweise 28 und der Bipolarplatte 24. Die Dichtelemente 27 und 28 werden auf die abgestuften Ränder 23 und 25 aufgespritzt. Während auf der einen Seite die Spalte 33 genügend Freiraum für eine elastische Verformung der Dichtelemente 27 und 28 ergeben, wird die elastische Verformungsmöglichkeit der Dichtelemente 27 und 28 auf den gegenüberliegenden Seiten 34 und 35 durch genügend Freiraum am Rand bzw. an der Durchbrechung 26 ermöglicht.

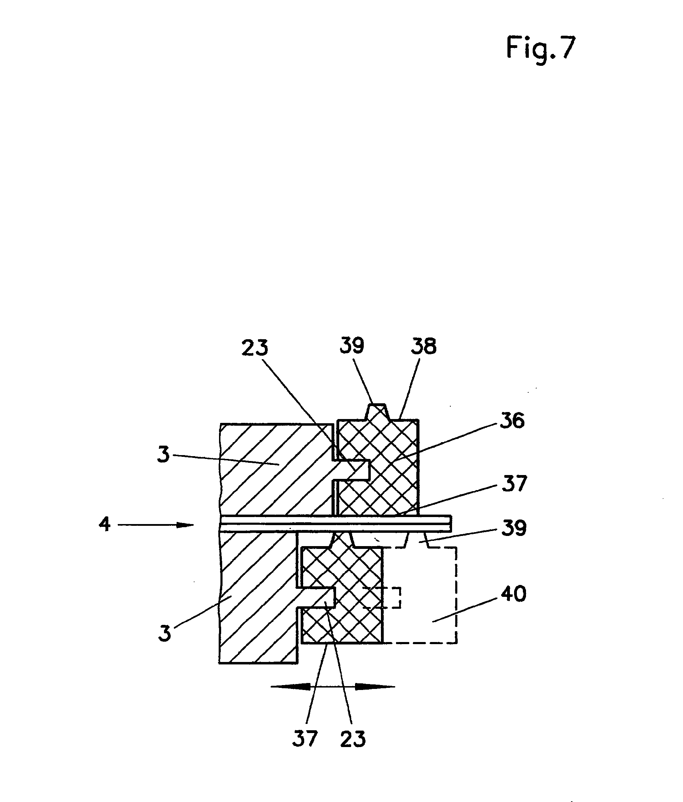

Am Beispiel der Figur 7 wird eine besonders günstige Ausführungsform eines Dichtelementes 36 behandelt, das auf der einen Seite eine im wesentlichen flach ausgebildete Dichtfläche 37 und an der anderen Seite eine Dichtfläche 38 mit einem vorstehenden Dichtprofil 39 hat. Der Rand 23 der Bipolarplatte 3 ist, wie in den Figuren 6A und 6B beschrieben, abgestuft und hält die Dichtelemente 36 und 40. Zwischen den Dichtelementen 36 und 40 liegt die MEA 4. Auf der unteren Seite der Figur ist das Dichtelement 40 gegenüber der Mitte des Dichtelements 36 nach links verschoben. Außerdem ist gestrichelt das Dichtelement 40 gegenüber der Mitte des Dichtelements 36 nach rechts verschoben eingezeichnet. Solche Verschiebungen können aus Toleranzgründen während der Montage oder auch im Betrieb entstehen. Durch das vorstehende Dichtprofil 39 wird jedoch in jeder Lage des Dichtprofils 40 zum Dichtprofil 36 eine äußerst sichere und gleichmäßige Kräfte- und Pressungsverteilung erreicht. Das Dichtprofil 39 liegt an der MEA 4 im Bereich der flachen Dichtfläche 37 des Dichtelements 36 an. Das Dichtprofil 39 kann selbstredend auch bei den Dichtelementen 10, der Figuren 1 bis 6B zur Anwendung kommen.

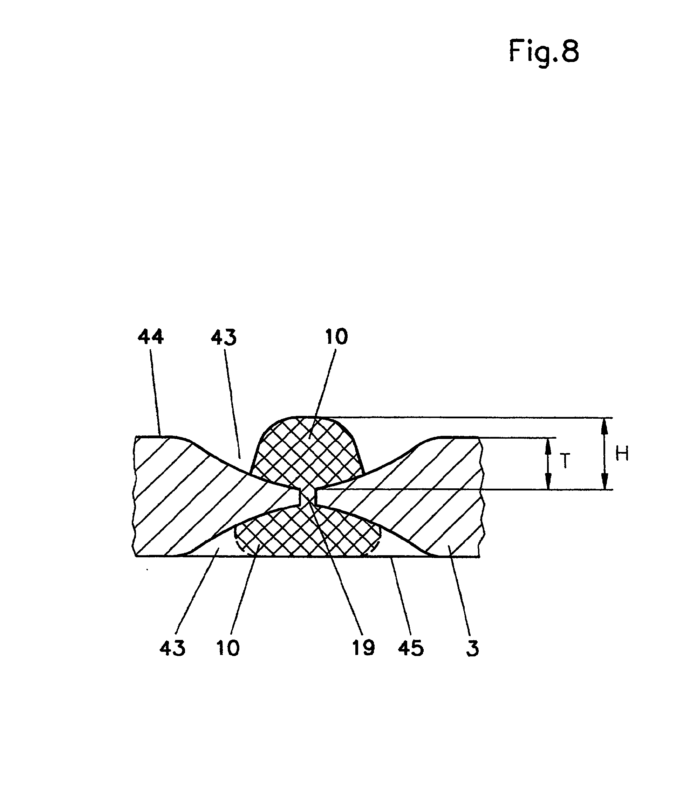

Die Figur 8 zeigt im Schnitt Dichtelemente 10, die in rinnenförmige Ausnehmungen 43 auf beiden Seiten der Bipolarplatte 3 eingefügt sind. Über die Löcher 19 sind die Dichtelemente 10 miteinander verbunden. Die Höhe H der ungepressten Dichtelemente 10, gemessen von der Talsohle der Ausnehmung 43 aus, ist größer als die Tiefe T der Ausnehmung 43 gemessen von der Talsohle bis zur Oberfläche 44 der Bipolarplatte 3. Im oberen Teil der Figur ist das Dichtelement 10 im ungepressten Zustand eingezeichnet. Dabei überragt es die Oberfläche 44 der Bipolarplatte 3. Im unteren Teil der Figur liegt das Dichtelement 10 an einer Fläche 45 einer benachbarten Bipolarplatte oder MEA an und ist zusammengepreßt. Deutlich sichtbar ist, daß nach dem Zusammenpressen des Dichtelemets 10 noch genügend Ausweichmöglichkeit für das Dichtelement 10 in den Ausnehmungen 43 verbleibt. Dadurch bleibt die Elastizität des Dichtelements 10 erhalten.

## Patentansprüche

1. Dichtungsanordnung für miteinander zu verbindende großflächige dünne Teile zum gegenseitigen Abdichten von benachbarten Trennplatten, insbesondere von Bipolarplatten mit zwischengelegten Ionenaustausch-Membran-Einheiten (MEA) in Brennstoffzellen mit Dichtelementen aus polymeren Material, bei denen die einzelnen Dichtelemente in Nuten der Trennplatten eingefügt sind, wobei zwischen den Seitenwänden (12) der Nuten (9) und den benachbarten Seitenwänden (11) der Dichtelemente (10) Spalten (13) zur Aufnahme des beim Zusammenpressen der Dichtelemente (10) ausweichenden elastischen Dichtungsmaterials vorhanden sind, wobei wenigstens eine Spalte (13) über eine ganze Seitenwand (12) einer Nut (9) verläuft und die Dichtelemente (10) vor ihrem Zusammenpressen die Nuten (9) nur teilweise ausfüllen und die Höhe (H) der Dichtelemente (10) größer als die Tiefe (T) der Nuten (9) ist, **dadurch gekennzeichnet, dass** die Nutgründe der Nuten (9) mit Sacklöchern (16) oder durchgängigen Löchern (19) zur Verbindung der Dichtelemente (10) mit der jeweiligen Trennplatte (2, 3) versehen sind.

2. Dichtungsanordnung nach Anspruch 1, **dadurch gekennzeichnet, daß** das über die Nuten (9) hinausragende Volumen der Dichtelemente (10) kleiner als das bei nicht zusammengepressten Dichtelementen (10) vorhandene Volumen der Spalte (13) ist.

3. Dichtungsanordnung nach Anspruch 1 oder 2, **dadurch gekennzeichnet, daß** die Sacklöcher (18) schräg zur Plattenebene ausgerichtet sind.

4. Dichtungsanordnung nach einem der Ansprüche 1 bis 3, **dadurch gekennzeichnet, daß** die Sacklöcher (18) zu ihrem Boden hin erweitert sind.

5. Dichtungsanordnung nach einem der Ansprüche 1 oder 2, **dadurch gekennzeichnet, daß** die Bipolarplatten (2) mit einseitigen Nuten (9) von der Talsohle ausgehende durchgängige Löcher (19) haben, die in von der anderen Seite der Platte (2) angebrachte Bohrungen (20) größeren Durchmessers münden.

6. Dichtungsanordnung nach Anspruch 1, **dadurch gekennzeichnet, daß** die abzudichtenden Ränder (23, 25) der Bipolarplatten (23) mit einer ein- oder zweiseitigen abgestuften Kante (41) versehen sind, die jeweils von einem Dichtelement (27, 28) eingefaßt ist.

7. Dichtungsanordnung nach Anspruch 1, **dadurch gekennzeichnet, daß** die Dichtelemente (36, 40) an einer ihrer Dichtflächen (38) mit einem vorstehenden Dichtprofil (39) ausgestattet sind, das an der MEA im Bereich der flach ausgebildeten Dichtfläche (37) des benachbarten Dichtelements (36) anliegt.

## Claims

1. Sealing arrangement for large-area thin parts to be connected to one another for mutual sealing of adjacent separating plates, in particular of bipolar plates with intermediate ion-exchange membrane assemblies (MEA) in fuel cells with sealing elements composed of polymer material, in which the individual sealing elements are inserted into grooves in the separating plates, with gaps (13) being provided between the side walls (12) of the grooves (9) and the adjacent side walls (11) of the sealing elements (10) in order to hold the elastic sealing material which escapes when the sealing elements (10) are pressed together, with at least one gap (13) running over an entire side wall (12) of a groove (9), and with the sealing elements (10) being only partially filled before the grooves (9) are pressed together, and with the height (H) of the sealing elements (10) being greater than the depth (T) of the grooves (9), **characterized in that** the groove bases of the grooves (9) are provided with blind holes (16) or holes (19) through them for connection of the sealing elements (10) to the respective separating plate (2, 3).

2. Sealing arrangement according to Claim 1, **characterized in that** the volume of the sealing elements (10) projecting beyond the grooves (9) is less than the volume of the gaps (13) which are present when the sealing elements (10) have not been pressed together.

3. Sealing arrangement according to Claim 1 or 2, **characterized in that** the blind holes (18) are aligned at an angle to the plate plane.

4. Sealing arrangement according to one of Claims 1 to 3, **characterized in that** the blind holes (18) are widened towards their base.

5. Sealing arrangement according to one of Claims 1 or 2, **characterized in that** the bipolar plates (2) with grooves (9) on one side have holes (19) which pass through them, originate from the base of the valley and open into holes (20) which are incorporated from the other side of the plate (2) and have a larger diameter.

6. Sealing arrangement according to Claim 1, **characterized in that** the edges (23, 25) to be sealed of the bipolar plates (23) are provided with a stepped rim (41) on one or two sides, which is in each case gripped by a sealing element (27, 28).

7. Sealing arrangement according to Claim 1, **characterized in that** the sealing elements (36, 40) are equipped on one of their sealing surfaces (38) with a projecting sealing profile (39), which rests on the MEA in the area of the flat sealing surface (37) of the adjacent sealing element (36).

## Revendications

1. Agencement d'étanchéité pour des éléments minces à grande surface à assembler l'un à l'autre pour l'étanchéité mutuelle de plaques de séparation voisines, en particulier pour des plaques bipolaires avec des unités de membrane échangeuse d'ions (MEA) interposées dans des piles à combustible avec des éléments d'étanchéité en une matière polymère, dans lesquelles les éléments d'étanchéité individuels sont introduits dans des rainures des plaques de séparation, dans lequel il y a, entre les parois latérales (12) des rainures (9) et les parois latérales voisines (11) des éléments d'étanchéité (10) des fentes (13) destinées à recevoir la matière d'étanchéité élastique qui déborde lors de la compression des éléments d'étanchéité (10), dans lequel au moins une fente (13) s'étend sur toute une paroi latérale (12) d'une rainure (9) et les éléments d'étanchéité (10) ne remplissent que partiellement les rainures (9) avant leur compression et la hauteur (H) des éléments d'étanchéité (10) est plus grande que la profondeur (T) des rainures (9), **caractérisé en ce que** les fonds de rainure des rainures (9) sont pourvus de trous borgnes (16) ou de trous oblongs (19) permettant d'assembler les éléments d'étanchéité (10) à la plaque de séparation respective (2, 3).

2. Agencement d'étanchéité selon la revendication 1, **caractérisé en ce que** le volume des éléments d'étanchéité (10) sortant des rainures (9) est plus petit que le volume des fentes (13) existant lorsque les éléments d'étanchéité (10) ne sont pas comprimés.

3. Agencement d'étanchéité selon la revendication 1 ou 2, **caractérisé en ce que** les trous borgnes (18) sont orientés en oblique par rapport au plan de la plaque.

4. Agencement d'étanchéité selon l'une quelconque des revendications 1 à 3, **caractérisé en ce que** les trous borgnes (18) sont évasés en direction de leur fond.

5. Agencement d'étanchéité selon l'une quelconque des revendications 1 ou 2, **caractérisé en ce que** les plaques bipolaires (2) avec des rainures (9) d'un seul côté comportent des trous traversants (19) partant du fond de la vallée, qui débouchent dans des alésages (20) de plus grand diamètre pratiqués à partir de l'autre côté de la plaque (2).

6. Agencement d'étanchéité selon la revendication 1, **caractérisé en ce que** les bords à rendre étanches (23, 25) des plaques bipolaires (23) sont pourvus d'une arête (41) étagée d'un côté ou des deux côtés, qui est chaque fois insérée dans un élément d'étanchéité (27, 28).

7. Agencement d'étanchéité selon la revendication 1, **caractérisé en ce que** les éléments d'étanchéité (36, 40) sont équipés, sur une de leurs surfaces d'étanchéité (38), d'un profilé d'étanchéité saillant (39), qui s'applique sur la MEA dans la région de la surface d'étanchéité plate (37) de l'élément d'étanchéité voisin (36).
